# EUROPEAN PATENT SPECIFICATION

(11) **EP 3 617 347 B1**
(45) Date of publication and mention of the grant of the patent: **16.09.2020**
(21) Application number: 18191198.3
(22) Date of filing: 28.08.2018
(51) Int. Cl.: C25B 1/04, C25B 15/08

(54) **METHOD FOR STORING ENERGY IN AN ENERGY STORAGE SYSTEM**
VERFAHREN ZUR ENERGIESPEICHERUNG IN EINEM ENERGIESPEICHERSYSTEM
PROCÉDÉ POUR STOCKER DE L'ÉNERGIE DANS UN SYSTÈME DE STOCKAGE D'ÉNERGIE

(43) Date of publication of application: 04.03.2020
(73) Proprietor: Doosan Lentjes GmbH, 40880 Ratingen (DE)
(72) Inventor: Kehrmann, Kai, 44577 Castrop-Rauxel (DE); Einicke, Clemens, 40699 Erkrath (DE); Stetter, Thomas, 40545 Düsseldorf (DE)
(74) Representative: Feucker, Max Martin

(56) References cited:
- WO-A1-2012/028326
- WO-A1-2013/029701
- CN-A- 106 285 802
- ES-A1- 2 367 619
- US-A- 4 776 171

## Description

The present invention relates to a method for storing energy in a CO₂ neutral manner in an energy storage system, wherein primary electrical energy from a primary electrical energy source such as renewable energy sources is converted to gases such as methane and oxygen and wherein the gases are combusted to produce electrical energy. The system comprises an electrolysis unit for producing (pure) hydrogen and (pure) oxygen, a hydrocarbons reactor unit for producing hydrocarbons (i.e. methane CH₄ and/or methanol CH₃O) and water and a secondary electrical energy generator for producing secondary electrical energy and carbon oxide (such as carbon monoxide CO and/or carbon dioxide CO₂) and water. The electrolysis unit is operated by supplying the primary electrical energy and is connected to the hydrocarbons reactor unit to supply the hydrogen produced by the electrolysis unit to the hydrocarbons reactor unit. The electrolysis unit is also connected to the secondary electrical energy generator to supply the oxygen produced by the electrolysis unit to the secondary electrical energy generator. The hydrocarbons reactor is connected to the secondary electrical energy generator to supply the hydrocarbons produced by the hydrocarbons reactor unit to the secondary electrical energy generator. The secondary electrical energy generator is connected to the hydrocarbons reactor unit to supply the carbon oxide produced by the secondary electrical energy generator to the hydrocarbons reactor unit.

In case there is a surplus of electrical energy for example from renewable energy sources, the system can be used to produce and store oxygen and hydrocarbons. In case the demand for electrical energy is higher than the electrical energy that can by supplied by the renewable energy sources or other sources, the stored hydrocarbons and oxygen can be used to operate the secondary electrical energy generator, while the carbon oxide produced by the secondary electrical energy generator can be stored in order to be used to operate the hydrocarbons reactor.

EP 2 426 236 B1 discloses a respective system and a method to operate the system, in which the secondary electrical energy generator comprises a gas turbine or a steam turbine. Gas turbines and steam turbines are embodied to run at a steady load for a long time. As it takes a comparatively long time to run up gas turbines and steam turbines to a steady load, such gas turbines and steam turbines are not able to react on a sudden demand for electrical energy. Additionally, gas turbines and steam turbines run efficiently only in big scale systems, so that they can not be used cost efficiently in comparatively small local systems near the location where renewable energy is produced.

A similar system is known from DE 10 2012 214 907 B4, in which the secondary electrical energy generator comprises a heat recovery steam generator to produce the secondary electrical energy. Also, such heat recovery steam generator is not efficient, when electrical energy is demanded suddenly.

WO 2013/029701 A1 discloses an autonomous power supply system for the field of building services, which is to be connected to a primary energy source, a natural gas network or a H₂/CO₂ source.

ES 2 367 619 A1, US 4 776 171 A and CN 106 285 802 A disclose further systems.

Accordingly, it is an object of the present invention to avoid the drawbacks of the prior art and to provide an energy storage system and a method for solely temporary storing electrical energy, which are more efficient and more flexible in particular when electrical energy is suddenly demanded.

The object is achieved by a method with the features of the independent claim. Preferred embodiments of the method are described in the dependent claims and in the description, wherein single features of the preferred embodiments can be combined with each other in a technical meaningful manner.

The object is in particular achieved in that the secondary electrical energy generator comprises a piston engine, wherein the oxygen produced by the electrolysis unit and the hydrocarbons produced by the hydrocarbons reactor are combusted to operate the piston engine. For example, the oxygen and the hydrocarbons (and eventually further gaseous components) can be injected independently or directly as a mixture into the combustion chamber (cylinder) of the piston engine, so that the piston of the engine is driven by the expansion of the combusted gases. Alternatively, the oxygen and hydrocarbons can be combusted together and the thermal energy of the combustion process is used to operate a stirling engine. The piston engine comprises or is connected to an electrical generator connected to the piston engine. A Wankel engine with a rotating piston is also considered a piston engine.

As the CO₂ produced in the piston motor is kept in the closed circuit to operate the hydrocarbons reactor unit, the system is CO₂ neutral. Additionally, as pure oxygen is used to operate the piston engine the exhaust gases do not need to be cleaned avoiding the effort for a flue (exhaust) gas cleaning.

A piston engine can run up much faster than the turbines of a heavy industry system. Additionally, comparatively small piston engines can work efficiently, so that the system can be set up locally near the source of the renewable energy.

Furthermore, according to the invention the system is operated/embodied as closed loop system to which only the primary energy is provided during operation. This means, that all the fluids produced by the elements of the system (electrolysis unit, hydrocarbons reactor, secondary electrical energy) are kept in the system and are not provided to external processes and/or are received from external processes. Of course, this does not rule out that the fluids are provided after installation of the system and/or that the fluids are filled up in case of leakage or inefficiencies.

In particular, the system may comprise storage vessels in which the working fluids such as hydrogen (H₂), oxygen (O₂), hydrocarbons (i.e. methane CH₄, methanol CH₃O), water (H₂O) and carbon oxide (such as CO and/or CO₂) can be stored individually. In particular, a storage vessel is provided for oxygen and a storage vessel is provided for hydrocarbons, so that oxygen produced by the electrolysis unit and hydrocarbons produced by the hydrocarbons reactor can be stored, in case there is a surplus of electrical energy from the renewable energy sources, at which time the electrolysis unit and the hydrocarbons reactor would be run to produce the oxygen and hydrocarbons. Of course, also hydrogen might be stored in a respective vessel. Also, there might be a storage vessel for the carbon oxide produced by the operation of the piston engine in case there is a demand for electrical energy. This stored carbon oxide can then be used to operate the hydrocarbons reactor together with the hydrogen produced by the electrolysis unit. Energy needed to start the operation of the hydrocarbons reactor unit may be supplied from the primary electrical energy source or from any other electrical energy source. The piston engine may comprise a recirculation line to recirculate part of the combustion gases, in particular (pure) carbon oxide produced by operating the piston engine, back to the combustion process. This way the combustion process of the (initially pure) hydrocarbons and the (initially pure) oxygen can be optimized. As no air is used for the combustion process, nitrogen oxides as components of the combustion gases are avoided.

In a further embodiment of the invention the water produced by the secondary electrical energy generator and/or the water produced by the hydrocarbons reactor may be supplied to the electrolysis unit. Accordingly, the secondary electrical energy generator and/or the hydrocarbons reactor are connected to the electrolysis unit. Also in this regard, a vessel for temporary storing the water may be provided.

The electrolysis unit is preferably operated at a temperature between 50°C and 1000°C. In particular, in case of an alkaline electrolysis the temperature is between 60°C and 100°C and in case of a high temperature electrolysis the temperature is between 100°C and 1000°C.

The electrolysis unit is preferably operated with a pressure between 10 bar and 200 bar, preferably between 20 bar and 90 bar.

The hydrocarbons reactor unit is preferably operated at a temperature between 1°C and 700°C, preferably between 200°C and 500°C.

The hydrocarbons reactor unit is preferably operated with a pressure between 1 bar and 100 bar, preferably between 10 bar and 90 bar.

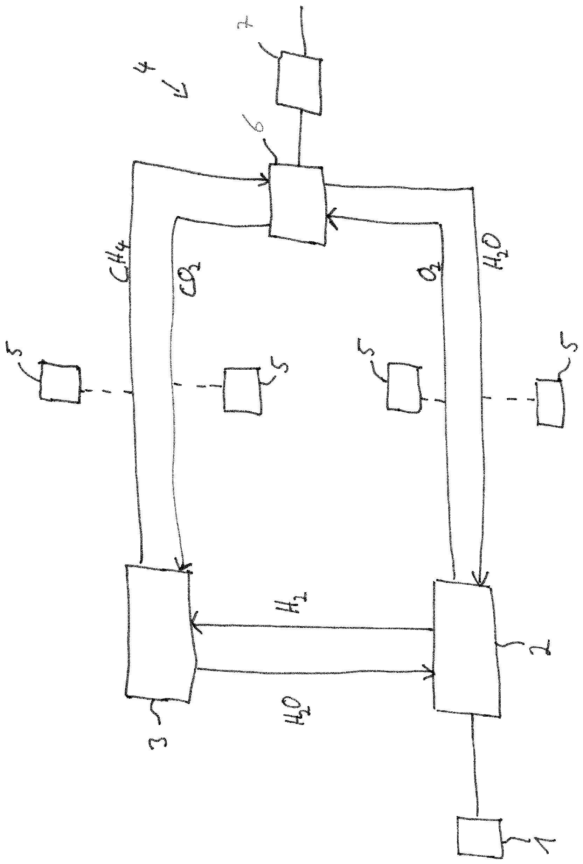

The invention and the technical background will now be explained with regard to the figure, which shows an exemplary embodiment of the invention. The figure shows schematically a system which comprises an electrolysis unit 2, a hydrocarbons reactor unit 3 and a secondary electrical energy generator 4, which is embodied by a piston engine 6 and an electrical generator 7 connected to the piston engine 6.

The electrolysis unit 2 is connected to a primary electrical energy source 1.

In operation, the electrolysis unit 2 produces pure hydrogen H₂ and pure oxygen O₂ from water H₂O.

The hydrogen H₂ produced by the electrolysis unit 2 is supplied to the hydrocarbons reactor unit 3, while the oxygen O₂ produced by the electrolysis unit 2 is supplied to the piston engine 6 of the secondary electrical energy generator 4. The oxygen O₂ produced by the electrolysis unit 2 may also be stored in a storage vessel 5, from which the oxygen O₂ can be supplied to the piston engine 6 on demand.

The hydrocarbons reactor unit 3 produces hydrocarbons (i.e. methane CH₄ and/or methanol CH₃O) by a catalytic reaction of the hydrogen H₂ supplied from the electrolysis unit 2 and carbon dioxide CO₂ produced by the piston engine 6 and eventually stored in a respective storage vessel 5.

The hydrocarbons produced by the hydrocarbons reactor unit 3 is supplied to the piston engine 6, wherein the hydrocarbons may be temporarily stored in a storage vessel 5.

The piston engine 6 is operated by combusting oxygen O₂ produced by the electrolysis unit 2 and hydrocarbons produced by the hydrocarbons reactor unit 3. The hydrocarbons and the oxygen O₂ may be directly combusted in a cylinder of the piston engine in order to drive the piston directly by the expansion of the combusted gases. Alternatively, the piston engine may be embodied as stirling engine in which the thermal energy is used to drive the pistons. The torque produced by the piston engine 6 is transferred into electrical energy by the electrical generator 7.

The combustion gases, in particular carbon oxide (such as CO and/or CO₂), produced by the piston engine 6 are supplied to the hydrocarbons reactor unit 3, wherein the carbon oxide may be temporarily stored in a storage vessel 5.

The water H₂O produced by the piston engine 6 is supplied to the electrolysis unit 2, wherein the water H₂O may be temporarily stored in a storage vessel 5.

### Reference numbers

- 1: primary electrical energy source
- 2: electrolysis unit
- 3: hydrocarbons reactor unit
- 4: secondary electrical energy generator
- 5: storage vessel
- 6: piston engine
- 7: electrical generator

## Claims

1. Method for temporary storing electrical energy in an energy storing system, the energy storing system comprising:
- an electrolysis unit (2) for producing hydrogen and oxygen,
- a hydrocarbons reactor unit (3) for producing hydrocarbons and water and
- a secondary electrical energy generator (4) for producing secondary electrical energy and carbon oxide, wherein
- the electrolysis unit (2) is connected to the hydrocarbons reactor unit (3) to supply the hydrogen produced by the electrolysis unit (2) to the hydrocarbons reactor unit (3),
- the electrolysis unit (2) is connected to the secondary electrical energy generator (4) to supply the oxygen produced by the electrolysis unit (2) to the secondary electrical energy generator (4),
- the hydrocarbons reactor (3) is connected to the secondary electrical energy generator (4) to supply the hydrocarbons produced by the hydrocarbons reactor unit (3) to the secondary electrical energy generator (4) and
- the secondary electrical energy generator (4) is connected to the hydrocarbons reactor unit (3) to supply the carbon oxide produced by the secondary electrical energy generator (4) to the hydrocarbons reactor unit (3),
the method comprising at least the following steps:
- Providing primary electrical energy,
- Operating the electrolysis unit (2) to produce hydrogen and oxygen,
- Operating the hydrocarbons reactor unit (3) to produce hydrocarbons and water,
- Operating the secondary electrical energy generator (4) to produce secondary electrical energy and carbon oxide,
- Supplying the hydrogen produced by the electrolysis unit (2) to the hydrocarbons reactor unit (3),
- Supplying the oxygen produced by the electrolysis unit (2) to the secondary electrical energy generator (4),
- Supplying the hydrocarbons produced by the hydrocarbons reactor unit (3) to the secondary electrical energy generator (4),
- Supplying the carbon oxide produced by the secondary electrical energy generator (4) to the hydrocarbons reactor unit (3),
- Using the primary electrical energy to operate the electrolysis unit (2),
- Using the supplied hydrogen and the supplied carbon oxide to operate the hydrocarbons reactor unit (3) and
- Using the supplied hydrocarbons and the supplied oxygen to operate the secondary electrical energy generator (4), **characterized in that**
the secondary electrical energy generator (4) comprises a piston engine (6), wherein the oxygen produced by the electrolysis unit (2) and the hydrocarbons produced by the hydrocarbons reactor unit (3) 1 are combusted to operate the piston engine (6) and **in that** the system is operated as closed loop to which only the primary energy is provided.

2. Method according to claim 1, wherein part of the carbon oxide produced by the piston engine (6) is recirculated to the piston engine (6) through a recirculation line.

3. Method according to one of the preceding claims, wherein the secondary electrical energy generator (4) is connected to the electrolysis unit (2) to supply water produced by the secondary electrical energy generator (4) to the electrolysis unit (2).

4. Method according to one of the preceding claims, wherein the hydrocarbons reactor unit (3) is connected to the electrolysis unit (2) to supply water produced by the hydrocarbons reactor unit (3) to the electrolysis unit (2).

5. Method according to one of the preceding claims, wherein a respective storage vessel (5) is provided, in which at least one of the following fluids is individually stored: hydrogen, oxygen, hydrocarbons, water, carbon oxide.

## Patentansprüche

1. Verfahren zum Zwischenspeichern elektrischer Energie in einem Energiespeichersystem, wobei das Energiespeichersystem Folgendes umfasst:
- eine Elektrolyseeinheit (2) zum Erzeugen von Wasserstoff und Sauerstoff,
- eine Kohlenwasserstoff-Reaktoreinheit (3) zum Erzeugen von Kohlenwasserstoffen und Wasser und
- einen Generator (4) sekundärer elektrischer Energie zum Erzeugen von sekundärer elektrischer Energie und Kohlenoxid, wobei
- die Elektrolyseeinheit (2) mit der Kohlenwasserstoff-Reaktoreinheit (3) verbunden ist, um den von der Elektrolyseeinheit (2) erzeugten Wasserstoff der Kohlenwasserstoff-Reaktoreinheit (3) zuzuführen,
- die Elektrolyseeinheit (2) mit dem Generator (4) sekundärer elektrischer Energie verbunden ist, um den von der Elektrolyseeinheit (2) erzeugten Sauerstoff dem Generator (4) sekundärer elektrischer Energie zuzuführen,
- der Kohlenwasserstoff-Reaktor (3) mit dem Generator (4) sekundärer elektrischer Energie verbunden ist, um die von der Kohlenwasserstoff-Reaktoreinheit (3) erzeugten Kohlenwasserstoffe dem Generator (4) sekundärer elektrischer Energie zuzuführen, und,
- der Generator (4) sekundärer elektrischer Energie mit der Kohlenwasserstoff-Reaktoreinheit (3) verbunden ist, um das von dem Generator (4) sekundärer elektrischer Energie erzeugte Kohlenoxid der Kohlenwasserstoff-Reaktoreinheit (3) zuzuführen,
wobei das Verfahren mindestens die folgenden Schritte umfasst:
- Bereitstellen von primärer elektrischer Energie,
- Betreiben der Elektrolyseeinheit (2) zum Erzeugen von Wasserstoff und Sauerstoff,
- Betreiben der Kohlenwasserstoff-Reaktoreinheit (3) zum Erzeugen von Kohlenwasserstoffen und Wasser,
- Betreiben des Generators sekundärer elektrischer Energie (4), um sekundäre elektrische Energie und Kohlenoxid zu erzeugen,
- Zuführen des von der Elektrolyseeinheit (2) erzeugten Wasserstoffs in die Kohlenwasserstoff-Reaktoreinheit (3),
- Zuführen des von der Elektrolyseeinheit (2) erzeugten Sauerstoffs in den Generator sekundärer elektrischer Energie (4),
- Zuführen der von der Kohlenwasserstoff-Reaktoreinheit (3) erzeugten Kohlenwasserstoffe in den Generator sekundärer elektrischer Energie (4),
- Zuführen des durch den Generator sekundärer elektrischer Energie (4) erzeugten Kohlenoxids in die Kohlenwasserstoff-Reaktoreinheit (3),
- Verwenden der primären elektrischen Energie zum Betrieb der Elektrolyseeinheit (2),
- Verwenden des zugeführten Wasserstoffs und des zugeführten Kohlenoxids zum Betrieb der Kohlenwasserstoff-Reaktoreinheit (3) und
- Verwenden der zugeführten Kohlenwasserstoffe und des zugeführten Sauerstoffs zum Betrieb des Generators sekundärer elektrischer Energie (4),
**dadurch gekennzeichnet, dass**
der Generator (4) sekundärer elektrischer Energie einen Kolbenmotor (6) umfasst, wobei der von der Elektrolyseeinheit (2) erzeugte Sauerstoff und die von der Kohlenwasserstoff-Reaktoreinheit (3) erzeugten Kohlenwasserstoffe verbrannt werden, um den Kolbenmotor (6) zu betreiben, und dass das System als geschlossener Kreislauf betrieben wird, dem nur die primäre Energie zugeführt wird.

2. Verfahren nach Anspruch 1, wobei ein Teil des durch den Kolbenmotor (6) erzeugten Kohlenoxids durch eine Rückführleitung zum Kolbenmotor (6) zurückgeführt wird.

3. Verfahren nach einem der vorhergehenden Ansprüche, wobei der Generator (4) sekundärer elektrischer Energie mit der Elektrolyseeinheit (2) verbunden ist, um von dem Generator (4) sekundärer elektrischer Energie erzeugtes Wasser der Elektrolyseeinheit (2) zuzuführen.

4. Verfahren nach einem der vorhergehenden Ansprüche, wobei die Kohlenwasserstoff-Reaktoreinheit (3) mit der Elektrolyseeinheit (2) verbunden ist, um von der Kohlenwasserstoff-Reaktoreinheit (3) erzeugtes Wasser der Elektrolyseeinheit (2) zuzuführen.

5. Verfahren nach einem der vorhergehenden Ansprüche, wobei jeweils ein Speicherbehälter (5) bereitgestellt wird, in dem mindestens eines der folgenden Fluide einzeln gespeichert ist: Wasserstoff, Sauerstoff, Kohlenwasserstoffe, Wasser, Kohlenoxid.

## Revendications

1. Procédé de stockage temporaire d'énergie électrique dans un système de stockage d'énergie, le système de stockage d'énergie comprenant :
- une unité d'électrolyse (2) permettant de produire de l'hydrogène et de l'oxygène,
- une unité de réacteur d'hydrocarbures (3) permettant de produire des hydrocarbures et de l'eau et
- un générateur d'énergie électrique secondaire (4) permettant de produire de l'énergie électrique secondaire et de l'oxyde de carbone, dans lequel
- l'unité d'électrolyse (2) est reliée à l'unité de réacteur d'hydrocarbures (3) afin de fournir l'hydrogène produit par l'unité d'électrolyse (2) à l'unité de réacteur d'hydrocarbures (3),
- l'unité d'électrolyse (2) est reliée au générateur d'énergie électrique secondaire (4) afin de fournir l'oxygène produit par l'unité d'électrolyse (2) au générateur d'énergie électrique secondaire (4),
- le réacteur d'hydrocarbures (3) est relié au générateur d'énergie électrique secondaire (4) afin de fournir les hydrocarbures produits par l'unité de réacteur d'hydrocarbures (3) au générateur d'énergie électrique secondaire (4) et
- le générateur d'énergie électrique secondaire (4) est relié à l'unité de réacteur d'hydrocarbures (3) afin de fournir l'oxyde de carbone produit par le générateur d'énergie électrique secondaire (4) à l'unité de réacteur d'hydrocarbures (3),
le procédé comprenant au moins les étapes suivantes consistant à :
- fournir de l'énergie électrique primaire,
- faire fonctionner l'unité d'électrolyse (2) afin de produire de l'hydrogène et de l'oxygène,
- faire fonctionner l'unité de réacteur d'hydrocarbures (3) afin de produire les hydrocarbures et l'eau,
- faire fonctionner le générateur d'énergie électrique secondaire (4) afin de produire de l'énergie électrique secondaire et de l'oxyde de carbone,
- fournir l'hydrogène produit par l'unité d'électrolyse (2) à l'unité de réacteur d'hydrocarbures (3),
- fournir l'oxygène produit par l'unité d'électrolyse (2) au générateur d'énergie électrique secondaire (4),
- fournir les hydrocarbures produits par l'unité de réacteur d'hydrocarbures (3) au générateur d'énergie électrique secondaire (4),
- fournir l'oxyde de carbone produit par le générateur d'énergie électrique secondaire (4) à l'unité de réacteur d'hydrocarbures (3),
- utiliser l'énergie électrique primaire afin de faire fonctionner l'unité d'électrolyse (2),
- utiliser hydrogène fourni et l'oxyde de carbone fourni afin de faire fonctionner l'unité de réacteur hydrocarbures (3) et
- utiliser les hydrocarbures fournis et l'oxygène fourni afin de faire fonctionner le générateur d'énergie électrique secondaire (4),
**caractérisé en ce que** le générateur d'énergie électrique secondaire (4) comprend un moteur à mouvement alternatif (6), dans lequel l'oxygène produit par l'unité d'électrolyse (2) et les hydrocarbures produits par l'unité de réacteur hydrocarbures (3) sont brûlés afin de faire fonctionner le moteur à mouvement alternatif (6) et **en ce que** le système fonctionne en boucle fermée à laquelle uniquement l'énergie primaire est apportée.

2. Procédé selon la revendication 1, dans lequel une partie de l'oxyde de carbone produit par le moteur à mouvement alternatif (6) est remise en circulation au moteur à mouvement alternatif (6) au moyen d'une conduite de retour des gaz d'échappement.

3. Procédé selon l'une quelconque des revendications précédentes, dans lequel le générateur d'énergie électrique secondaire (4) est relié à l'unité d'électrolyse (2) afin de fournir de l'eau produite par le générateur d'énergie électrique secondaire (4) à l'unité d'électrolyse (2).

4. Procédé selon l'une quelconque des revendications précédentes, dans lequel l'unité de réacteur d'hydrocarbures (3) est reliée à l'unité d'électrolyse (2) afin de fournir de l'eau produite par l'unité de réacteur d'hydrocarbures (3) à l'unité d'électrolyse (2).

5. Procédé selon l'une quelconque des revendications précédentes, dans lequel un récipient de stockage (5) respectif est fourni, dans lequel au moins l'un des fluides suivants est stocké de manière individuelle : de l'hydrogène, de l'oxygène, des hydrocarbures, de l'eau, de l'oxyde de carbone.
